# EUROPEAN PATENT APPLICATION

(11) **EP 0 527 028 A1**
(43) Date of publication of application: **10.02.1993**
(21) Application number: 92307074.2
(22) Date of filing: 03.08.1992
(51) Int. Cl.: A22C 17/04

(54) **De-boning device**

(30) Priority: 03.08.1991 GB 9116812
(71) Applicant: Thornton, George Peter, Keighley, West Yorkshire BD22 7QL (GB)
(72) Inventor: Thornton, George Peter, Keighley, West Yorkshire BD22 7QL (GB)
(74) Representative: Watson, Anthony Stephen

(57) **Abstract**

A de-boning device comprises a bed-plate (2) and an open-ended tubular member (4) which is substantially normal to said bed-plate and which communicates with or projects through a hole in said bed-plate. The upper end of the tubular member is honed or otherwise sharpened so as to provide a cutting edge, and the bed-plate and the tubular member are composed of stainless steel.

## Description

This invention relates to a de-boning device particularly, but not exclusively, for de-boning chicken thighs.

It has proved very difficult and time-consuming to de-bone chicken thighs, due to the fact that a very sharp knife has to be used to separate the flesh from the bone. The manual operation is quite dangerous, and very often the flesh is bruised and damaged during the de-boning process.

The present invention therefore seeks to provide a device which will obviate the above-related disadvantages.

According to the present invention there is provided a de-boning device comprising a bed-plate and an open-ended tubular member, said tubular member being substantially normal to said bed-plate and communicating with or projecting through a hole in said bed-plate.

Preferably, said tubular member will be welded to said bed-plate, the lower end of said tubular member projecting below said bed-plate.

The upper end of said tubular member will preferably be honed or otherwise sharpened so as to provide a cutting edge.

The bed-plate and tubular member will preferably be made of stainless steel.

In order that the invention may be more readily understood, an embodiment thereof will now be described, by way of example, reference being made to the accompanying drawings, wherein:-
Figure 1 is a plan view of a de-boning device in accordance with the invention;
Figure 2 is a front elevation of the device of Figure 1; and
Figure 3 is a schematic view showing the device of Figures 1 and 2 in use.

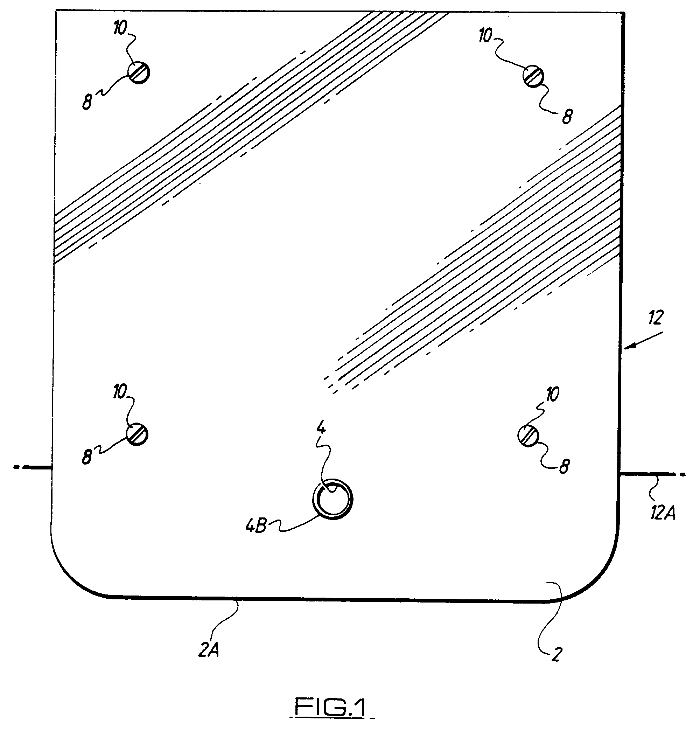

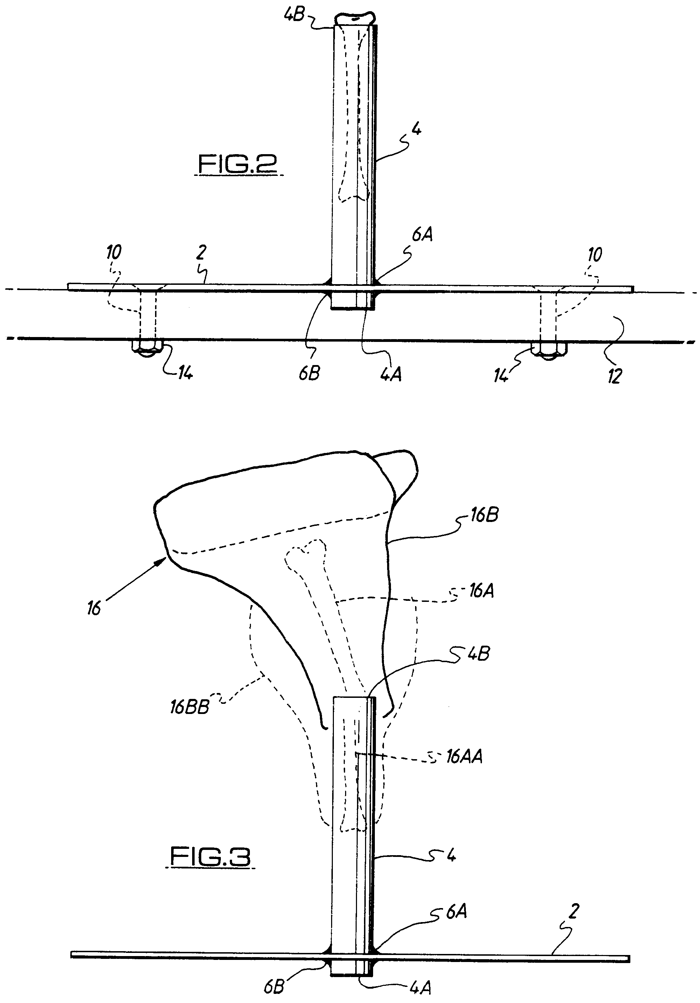

Referring to the drawings, and firstly to Figures 1 and 2, the de-boning device in accordance with the invention comprises a bed-plate 2 and a tubular member 4 which is upstanding from said bed-plate and substantially normal thereto, and which is fixedly secured to said bed-plate by welding as indicated by reference numerals 6A and 6B.

It will be seen from Figure 2 that the tubular member 4 passes through a hole in said bed-plate such that the lower end of said tubular member 4 is located below said bed-plate.

The upper end of the tubular member 4 is honed or otherwise sharpened as indicated by reference numeral 4B so as to provide a cutting edge at said upper end, the purpose of which will be explained hereinafter

The bed-plate 2 is provided with a plurality - four in the illustrated embodiment - of through-bores 8 through which pass bolts 10 so as to secure said bed-plate to a table or other support surface 12. The bolts 10 are engaged by nuts 14, and the through-bores 8 are countersunk such that the tops of the bolts 10 may be co-planar with the upper surface of the bed-plate.

The bed-plate 2 and the tubular member 4 are composed of stainless steel.

From Figure 1 it will be seen that the leading edge 2A of the bed-plate 2, as well as the tubular member 4, lies beyond the edge 12A of the table or other support surface 12.

In use, with the device located on the table or other support surface 12 - as will be seen in Figures 1 and 2 a chicken thigh 16, referring now to Figure 3, is held relative to the honed or sharpened upper end 4B of the tubular member 4 and downward pressure is applied to the chicken thigh which has the effect of moving the chicken thigh downwardly relative to the stationery tubular member 4. During such movement, the bone 16A of the thigh moves down the inside of the tubular member and the fleshy part 16B of the thigh moves down the outside of the tubular member, these positions being shown in phantom by the reference numerals 16AA and 16BB. Thus the fleshy part 16B is separated from the bone 16A, this being facilitated by the honed or sharpened end 4B of the tubular member 4.

Once separated, the fleshy part 16B is removed from the tubular member, the bone 16A falling under gravity from the lower open end 4A of said member and into a collecting receptacle (not shown), or being removed by hand.

Thus the invention provides a simple and effective device for de-boning chicken thighs and other similar poultry and similar pieces. The device is simple to operate with and relatively inexpensive to produce.

It will be appreciated that material other than stainless steel may be used for the bed-plate and the tubular member, and that the device may be used for the de-boning of other than chicken thighs.

## Claims

1. A de-boning device comprising a bed-plate and an open-ended tubular member, said tubular member being substantially normal to said bed-plate and communicating with or projecting through a hole in said bed-plate.

2. A de-boning device in accordance with Claim 1, wherein said tubular member is welded to said bed-plate, the lower end of said tubular member projecting below said bed-plate.

3. A de-boning device in accordance with Claim 1 or Claim 2, wherein the upper end of said tubular member is honed or otherwise sharpened to provide a cutting edge.

4. A de-boning device in accordance with any of Claims 1 to 3, wherein said bed-plate is provided with a plurality of through-bores through which are passed means to secure said bed-plate to a support surface.

5. A de-boning device in accordance with Claim 4, wherein said through-bores are countersunk so that the tops of said means are co-planar with an upper surface of said bed-plate.

6. A de-boning device in accordance with any of the preceding Claims, wherein said bed-plate and said tubular member are composed of stainless steel.

7. A de-boning device substantially as herein described with reference to and as illustrated in Figures 1 and 2 and adapted to operate substantially as herein described with reference to Figure 3 of the accompanying drawings.
